# EUROPEAN PATENT APPLICATION

(11) **EP 4 718 195 A1**
(43) Date of publication of application: **01.04.2026**
(21) Application number: 25203258.6
(22) Date of filing: 19.09.2025
(51) Int. Cl.: G05B 23/02, G06N 20/00

(54) **AUTOMATED MACHINE LEARNING BASED WORKFLOW FOR TIMESERIES FORECASTING**

(30) Priority: 30.09.2024 US 202418901722
(71) Applicant: FUJITSU LIMITED, Kawasaki-shi, Kanagawa 211-8588 (JP); Archimedes Controls Corporation, Pleasanton CA 94588 (US)
(72) Inventor: McTHROW, Michael, Contra Costa, CA (US); UCHINO, Kanji, Santa Clara, CA (US); YU, Wenli, Pleasanton, CA (US); TAN, Liangcai, Pleasanton, CA (US)
(74) Representative: Hoffmann Eitle

(57) **Abstract**

In an embodiment, workflow for timeseries forecasting may be performed based on automated machine learning. Sensor data for measurement parameter is received from plurality of sensors installed in built environment and the received sensor data is stored in table of relational database. Cut-off record associated with previous training checkpoint is determined of the forecasting model for the measurement parameter. Records including new records are determined for which respective timestamps occur after the measurement timestamp of cut-off record. Size of the determined records are compared with threshold size and training dataset is prepared. The forecasting model is trained on the training dataset based on the comparison.

## Description

### FIELD

The embodiments discussed in the present disclosure are related to automated machine learning based workflow for timeseries forecasting.

### BACKGROUND

Maintaining and optimizing complex systems with multiple interconnected components, such as data centers, industrial facilities, and large-scale Heating, Ventilation, and Air Conditioning (HVAC) installations, presents significant challenges for operators and facility managers. These systems generate vast amounts of sensor data related to environmental conditions, equipment performance, and energy consumption. However, effectively utilizing this data to predict maintenance needs, prevent failures, and optimize operations has proven difficult with traditional approaches.

Conventional methods often rely on fixed maintenance schedules or reactive responses to equipment failures, leading to inefficient resource allocation and potential downtime. While some facilities have implemented basic monitoring systems, these typically lack the ability to accurately forecast future maintenance requirements or provide actionable insights. Additionally, the sheer volume and complexity of sensor data collected from modern facilities can overwhelm human operators, making it challenging to identify meaningful patterns or trends without advanced analytical tools. There is a clear need for more sophisticated, data-driven approaches that can leverage the wealth of available information to proactively manage complex systems and improve overall operational efficiency.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

### SUMMARY

According to an aspect of an embodiment, a method may include a set of operations which may include receiving sensor data for a measurement parameter from a sensor of a plurality of sensors installed in a built environment The set of operations may further include storing the received sensor data as new records in a table of a relational database to determine a cut-off record associated with a previous training checkpoint of a forecasting model for the measurement parameter. The set of operations may further include determining, from the table, records including the new records for which respective measurement timestamps, as specified in the table, occur after a measurement timestamp of the cut-off record. A size of the determined records may be compared with a threshold size and prepare a training dataset based on the determined records to train the forecasting model on the training dataset based on the comparison.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

### BRIEF DESCRIPTION OF THE DRAWINGS

Example embodiments will be described and explained with additional specificity and detail through the use of the accompanying drawings in which:
FIG. 1 is a diagram representing an example environment related to automated machine learning based workflow for timeseries forecasting;
FIG. 2 is a block diagram that illustrates an exemplary system for automated machine learning based workflow for timeseries forecasting;
FIGs. 3A and 3B are diagrams that collectively illustrate a flow chart of an example method for automated machine learning based workflow training and timeseries forecasting;
FIGs. 4A and 4B are diagrams that collectively illustrate an exemplary user interface indicating forecasting value along with suggestion over the user interface;
FIG. 5 is a diagram that illustrates a flowchart of an example for automated machine learning based workflow for timeseries forecasting,
all according to at least one embodiment described in the present disclosure.

### DESCRIPTION OF EMBODIMENTS

Some embodiments described in the present disclosure may relate to methods and systems for automated machine learning based workflow for timeseries forecasting. In the present disclosure, sensor data may be received from a sensor from a plurality of sensors installed in a built environment. The sensors may include temperature sensors, humidity sensors, air pressure sensors, air quality sensors, and the like. The built environment may be a data center, an HVAC system, or similar facility. The received sensor data may be stored as new records in a table of a relational database. Each piece of sensor data may become a new record in the relational database, allowing for organized storage and easy retrieval for analysis. The database table may function as a structured repository for all incoming sensor data. A cut-off record may be determined, which may be associated with a previous training checkpoint of a forecasting model for measurement parameters. Records may be determined from the table, including new records for which respective measurement timestamps occur after a measurement timestamp of the cut-off record. The size of the determined records may be compared with a threshold size. A training dataset may be prepared based on the determined records. The forecasting model may be trained on the training dataset based on the comparison of the record size with the threshold size. If the size of the records is above the threshold size, the forecasting model may be trained on the training dataset If the size of the records is below the threshold size, an input for the forecasting model may be prepared based on the received sensor data.

The technological field of automated machine learning based workflow for timeseries forecasting may be improved by configuring a system to forecast workflow with respect to timeseries data. The system may receive sensor data for measurement parameters from sensors installed in a built environment and store the sensor data as new records in a relational database table. The system may determine a cut-off record associated with a previous training checkpoint of a forecasting model. Records including new records with measurement timestamps occurring after the cut-off record's timestamp may be determined from the table. The size of these records may be compared with a threshold size to prepare a training dataset The forecasting model may be trained on this training dataset based on the comparison.

The approach may offer several advantages:
1. Automated data processing: The system may manage large volumes of sensor data efficiently, reducing manual effort and potential for human error.
2. Adaptive model training: The forecasting model may be updated based on new data, ensuring its predictions remain accurate over time.
3. Efficient resource utilization: By comparing record size to a threshold, the system may optimize when to retrain the model, balancing computational resources and prediction accuracy.
4. Improved decision-making: The forecasting capabilities may enable proactive maintenance and optimization of built environments.

Conventional methods for detecting and managing environmental parameters in built environments may involve transmitting data to IoT server-based cloud systems. These systems may allow operators or administrators to monitor environmental conditions and receive alerts for unusual situations. However, managing data from IoT systems may present several challenges:
1. Human error: Manual data entry or monitoring may be prone to errors, potentially leading to inaccurate data and costly mistakes.
2. Time-intensive processing: Manually processing large volumes of data may reduce efficiency and productivity.
3. Data format inconsistencies: IoT devices may generate data in various formats, making manual integration and standardization complex and error prone.
4. Real-time processing requirements: IoT data may need to be processed in real-time to be useful, which manual management may struggle to achieve.

The present disclosure may address these challenges by providing an automated, machine learning-based approach to timeseries forecasting. This approach may enable more efficient, accurate, and timely processing of sensor data, leading to improved management and optimization of built environments.

Embodiments of the present disclosure are explained with reference to the accompanying drawings.

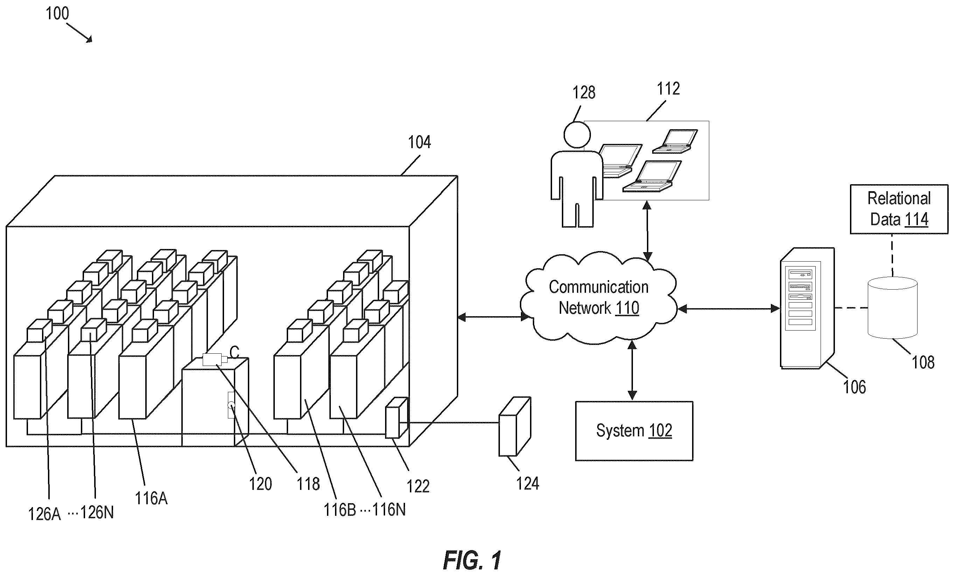

FIG. 1 is a diagram representing an exemplary environment related to automated machine learning based workflow for timeseries forecasting, arranged in accordance with at least one embodiment described in the present disclosure. With reference to FIG. 1, there is shown an environment 100. The environment 100 may include a system 102, a built environment 104, a remote server 106, a relational database 108, a communication network 110, and a display device 112.

The system 102 may include suitable logic, circuitry, and interfaces that may be configured to receive sensor data for measurement parameters from a plurality of sensors 126A-126N installed in built environment 104. The system 102 may determine a cut-off record associated with a previous training checkpoint of a forecasting model 206. The system 102 may further determine records including new records for which respective measurement timestamps occur after the measurement timestamp of the cut-off record. The records including new records may be stored in a table of the relational database 108. Also, the system 102 may compare the size of the determined records and prepare training dataset. The system 102 may train the forecasting model 206 on the training dataset based on the comparison. The forecasting model 206 may be trained on the training dataset based on a determination that the size of the records is above the threshold size.

The system 102 may further prepare an input for the forecasting model 206 based on the received sensor data and a determination that the size of the records is below the threshold size. The system 102 utilizes the forecasting model 206 to predict the future value of the measurement parameter based on the prepared input. To provide suggestions for equipment (for example, plurality of sensors 126A-126N) in the built environment 104, the system 102 may query a knowledge database 214 using the forecast value. These suggestions can include actions such as equipment repair, maintenance, servicing, or replacement. Additionally, the suggestion may indicate whether the forecast value corresponds to a faulty state of the equipment.

In an embodiment, the system 102 may control the display device 112 associated with an administrator 128 of the built environment 104. This allows the forecast value and corresponding suggestion to be displayed for the administrator's reference. To prepare the training dataset, the system 102 may extract a feature column from the table records. This column may contain the measurement parameter and their corresponding measurement timestamps. The values may be sorted based on the measurement timestamps, and the median interval between such timestamps may be calculated. An aggregation query may be then executed to generate an aggregated feature column. The system 102 may identify any missing measurement timestamps in this feature column and determine a sliding window size. Finally, the training dataset may be obtained from the aggregated feature column using the sliding window size.

The built environment 104 may be, for instance, a data center, Heating, Ventilation, and Air Conditioning (HVAC) system, manufacturing building, warehouse, distribution center, or power plant, or similar facility. The data center may be considered as an exemplary built environment (as shown in FIG. 1). As shown for example, the built environment 104 as data center may include a set of racks 116A-116N, surveillance cameras 118, access monitoring devices 120, cooling components 122-124, and a plurality of sensors 126A-126N. The set of racks 116A-116N may house servers, switches, routers, power distribution units, patch panels, and cooling components 122-124 within the built environment 104. The built environment 104, remote server 106, and display device 112 may be communicatively coupled with each other via the communication network 110.

In some embodiments, the system 102 may include the built environment 104. In some other embodiments, the system 102 may be separately placed out of the built environment 104. In these or other embodiments, the system 102 may represent various built environments such as a data center, Heating, Ventilation, and Air Conditioning (HVAC) system, manufacturing building, warehouse, distribution center, or power plant, or similar facility.

The plurality of sensors 126A-126N may include, for example, temperature sensors, humidity sensors, pressure sensors, air quality index sensors, power consumption monitoring sensors, and the like. In an example embodiment, the built environment 104 may incorporate storage systems, networking equipment, power supply systems, and cable management components. The set of racks 116A-116N may include the plurality of servers ranging from traditional rack-mounted servers to blade servers. The storage systems may include hard drives, solid-state drives, and storage area networks (SANs). Networking equipment may include routers, switches, and firewalls to manage data traffic and ensure secure communication between devices, including the sensors 126A-126N. The plurality of sensors 126A-126N may be positioned within the built environment 104 based on specific requirements.

Access monitoring devices 120, also known as access control systems, may be security devices used to regulate and monitor entry and exit points in the built environment 104. The access monitoring devices 120 may be designed to ensure that only authorized individuals can access restricted areas, such as HVAC systems, data centers, or sensitive areas within a facility. Cooling components 122-124 may employ various cooling systems such as air cooling, hot and cold aisle containment, in-row and in-rack cooling, chilled water systems, liquid cooling, and free cooling to manage heat generated by servers.

The remote server 106 may include logic, interfaces, and/or code configured to store sensor data received from the at least one sensor of the plurality of sensors 126A-126N as the relational data 114. The remote server 106 may be configured to retrieve from the relational database 108, the sensor data stored as new records in table of relational database 108. In an embodiment, the remote server 106 may be configured remotely or may be placed within the system 102. In at least one embodiment, the remote server 106 may be implemented as a plurality of distributed cloud-based resources by use of several technologies that are well known to those ordinarily skilled in the art. In certain embodiments, the functionalities of the remote server 106 may be incorporated in its entirety or at least partially in the system 102, without a departure from the scope of the disclosure.

The relational database 108 may be stored or cached on a device such as a remote server 106 or the system 102. The relational database 108 may receive sensor data from the system 102 or the plurality of sensors 126A-126N and may provide queried data based on received queries. The received sensor data may be stored in form of table in the relational database 108. The relational database 108 may be hosted on multiple servers at the same or different locations. Operations of the relational database 108 may be executed using hardware including a processor, a microprocessor (e.g., to perform or control performance of one or more operations), a field-programmable gate array (FPGA), or an application-specific integrated circuit (ASIC). In some other instances, the relational database 108 may be implemented using software.

The communication network 110 may include various communication media through which the system 102 may communicate with remote servers 106 or devices storing sensor data. Examples of the communication network 110 may include, but are not limited to, the Internet, a cloud network, a Wireless Fidelity (Wi-Fi) network, a Personal Area Network (PAN), a Local Area Network (LAN), a cellular network (such as, a Long-term evolution (or 4G) cellular network or a 5G cellular network), a satellite network (such as a network of low earth orbit satellites), and/or a Metropolitan Area Network (MAN)). Various devices in the environment 100 may connect to the communication network 110 using various wired and wireless communication protocols, including TCP/IP, UDP, HTTP, FTP, ZigBee, EDGE, IEEE 802.11, Li-Fi, IEEE 802.16, multi-hop communication, wireless access point (AP), device-to-device communication, cellular communication protocols, and Bluetooth.

The display device 112 may include logic, circuitry, and interfaces configured to display forecast values and suggestions, potentially in graphical form. Examples of display devices 112 may include Cathode Ray Tube (CRT) monitors, Liquid Crystal Displays (LCD), Light Emitting Diode (LED) displays, Plasma Displays, Electronic paper displays (E-paper), touchscreen displays, and head-mounted displays. The display device 112 may include suitable logic, circuitry, and interfaces that may be configured to display forecast value along with the suggestion. The display device 112 may further display forecast values in the form of graph for the valuation. Examples of the display device 112 may include, but are not limited to, Cathode Ray Tube (CRT) monitors, Liquid Crystal Displays (LCD), Light Emitting Diode (LED) displays, Plasma Displays, Electronic paper displays (E-paper), touchscreen displays, head-mounted displays.

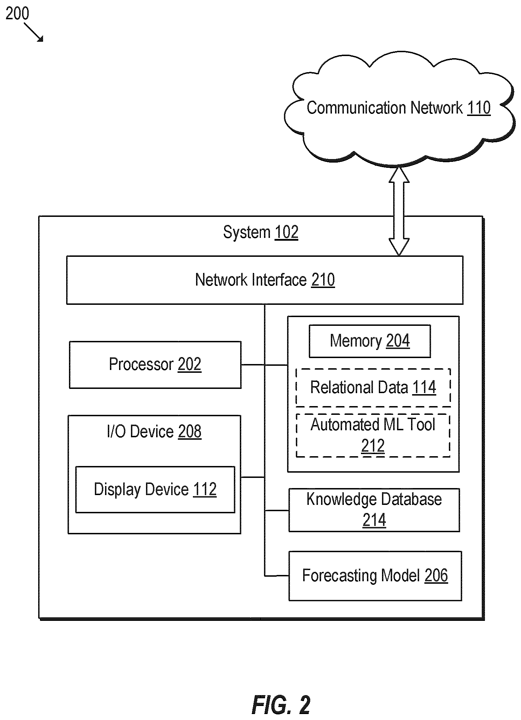

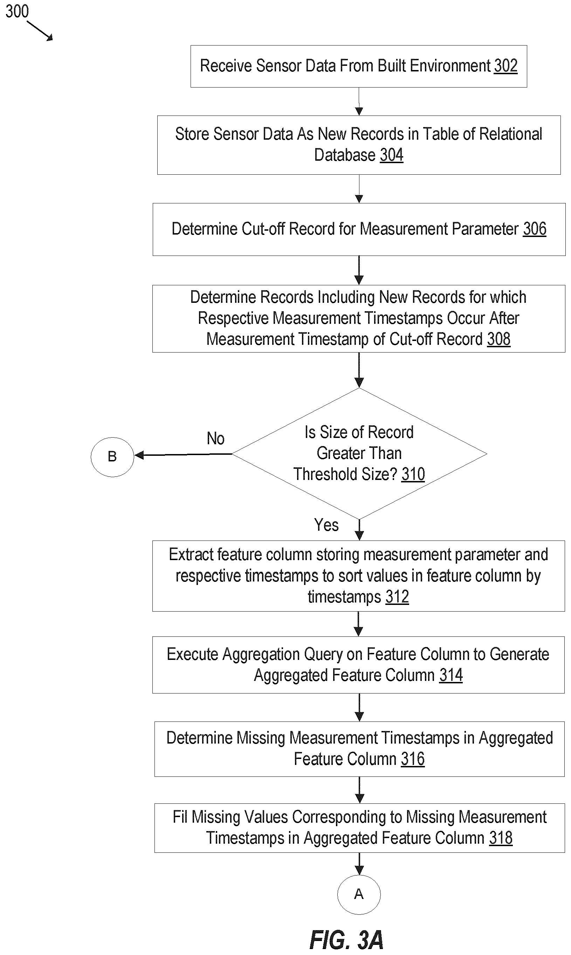

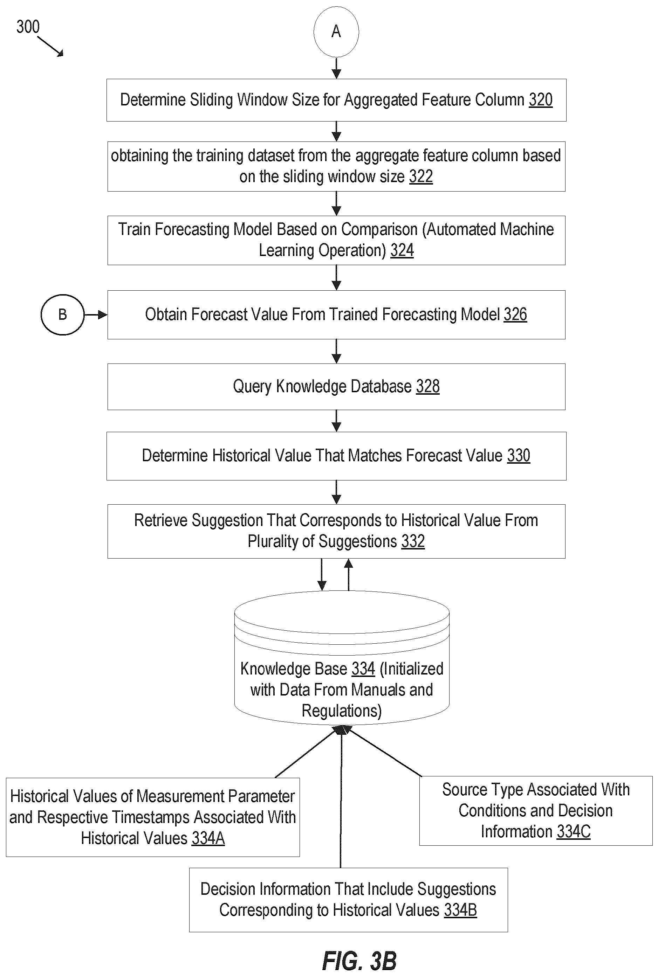

During operation, the system 102 may receive sensor data for a measurement parameter from the plurality of sensors 126A-126N installed in the built environment 104. The measurement parameter may be for example, temperature value received from the temperature sensor air quality index received from the air quality sensors, and the like. The system 102 may store the received sensor data as new records in a table of the relational database 108. At regular intervals or after a defined time duration, a check may be performed. As part of the check, the system 102 may determine a cut-off record associated with a previous training checkpoint of the forecasting model 206 for the measurement parameter. The cut-off record may be defined as the last record used in the previous training of the forecasting model 206. For instance, if the forecasting model 206 was last trained using temperature data up to timestamp '12:00:00' on a particular day, this timestamp may be considered the cut-off record. All temperature values recorded up to and including this timestamp were used in the previous training of the forecasting model 206. From the table, records including new records may be determined for which respective measurement timestamps occur after a measurement timestamp of the cut-off record. The size of such records may be compared with a threshold size to prepare a training dataset based on the comparison. The forecasting model 206 may be trained on the training dataset if the size of the records is above the threshold. The forecasting model 206 may be trained using an automated ML tool 212. The automated Machine Learning tool (AutoML) 212 may refer to a system 102 or process that automates the tasks involved in applying machine learning to real-world problems. The AutoML tool 212 may be used to automatically develop and refine the forecasting model 206 based on the sensor data from the table. The forecasting model 206 may be a machine learning model configured to predict future values or trends based on historical data. The forecasting model 206 and the AutoML tool 212 may be further described in FIGs. 2, 3A, and 3B.

In another aspect, if the size of the records is below the threshold size, the system 102 may prepare input for the forecasting model 206 based on received sensor data.

In some aspect, the system 102 may prepare the training dataset by extracting a feature column from records in the table. The feature column may store values of measurement parameters and respective measurement timestamps. Values in the feature column may be sorted based on measurement timestamps to compute median intervals between timestamps. An aggregation query may be executed on the sorted feature column to generate an aggregated feature column. The training dataset preparation may include filling missing values corresponding to missing measurement timestamps in the aggregated feature column and determining a sliding window size for the aggregated feature column. Details related to training dataset preparation and aggregation query execution are provided in FIG. 3A and FIG. 3B.

The forecasting model 206 may be applied to the prepared input to generate forecast values of measurement parameters for future timestamps. Based on the forecast values, a knowledge database 214 may be queried to determine suggestions for equipment (for example servers placed within the racks 116) installed in the built environment 104. Suggestions may include actions to perform repairs, maintenance, servicing, or replacement of equipment Suggestions may indicate whether forecast values correspond to faulty states of equipment or if equipment needs assistance. The display device 112 may be controlled to display forecast values along with suggestions. The display device 112 may be associated with an administrator 128 of the built environment 104.

Querying the knowledge database 214 may include determining historical values that match forecast values. Suggestions corresponding to matching historical values may be retrieved from a plurality of suggestions. The knowledge database 214 may include conditions including historical values of measurement parameters and associated timestamps. Conditions may include decision information that include suggestions corresponding to historical values. Conditions may also include source types associated with conditions and decision information.

Modifications, additions, or omissions may be made to FIG. 1 without departing from the scope of the present disclosure. For example, the environment 100 may include more or fewer elements than those illustrated and described in the present disclosure. For instance, in some embodiments, the environment 100 may include the system 102 but not the relational database 108. In addition, in some embodiments, the functionality of each of the relational database 108 may be incorporated into the system 102, without a deviation from the scope of the disclosure.

For each type of sensor data, the operations described in the aforementioned description may be repeated to train other forecasting models for such types of sensor data. For example, temperature forecasting based on the sensor data received from the temperature sensor, pressure forecasting based on the pressure value received from the pressure sensor, footfall forecasting based on the received access data, etc.

FIG. 2 is a block diagram that illustrates an exemplary system 102 for automated machine learning based workflow for timeseries forecasting, arranged in accordance with at least one embodiment described in the present disclosure. FIG. 2 is explained in conjunction with elements from FIG. 1. With reference to FIG. 2, there is shown a block diagram 200 of the system 102. The system 102 may include network a processor 202, a memory 204, forecasting model 206, I/O device 208, network interface 210. The I/O device 208 may include a display device 112. The memory 204 may include relational data 114, and an automated Machine Learning (AutoML) tool 212.

The processor 202 may include suitable logic, circuitry, and/or interfaces that may be configured to execute program instructions associated with different operations to be executed by the system 102. The processor 202 may include any suitable special-purpose or general-purpose computer, computing entity, or processing device, including various computer hardware or software modules, and may be configured to execute instructions stored on any applicable computer-readable storage media. For example, the processor 202 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 2, the processor 202 may include any number of processors configured to, individually or collectively, perform or direct performance of any number of operations of the system 102, as described in the present disclosure. Additionally, one or more of the processors may be present on one or more different systems, such as different remote servers 106.

In some embodiments, the processor 202 may be configured to interpret and/or execute program instructions and/or process data stored in the memory 204. In some embodiments, the processor 202 may fetch program instructions from the forecasting model 206 and load the program instructions in the memory 204. After the program instructions are loaded into memory 204, the processor 202 may execute the program instructions. Some of the examples of the processor 202 may be a Graphical Processing Unit (GPU), a Central Processing Unit (CPU), a Reduced Instruction Set Computer (RISC) processor, an Application-Specific Integrated Circuit (ASIC) processor, a Complex Instruction Set Computer (CISC) processor, a coprocessor, and/or a combination thereof.

The memory 204 may include suitable logic, circuitry, and/or interfaces that may be configured to store program instructions executable by the processor 202. In certain embodiments, the memory 204 may be configured to store information such as but not limited to sensor data, table of records including new records with respective timestamps, forecast value. The memory 204 may include computer-readable storage media for carrying or having computer-executable instructions or data structures stored thereon. Such computer-readable storage media may include any available media that may be accessed by a general-purpose or special-purpose computer, such as the processor 202.

By way of example, and not limitation, such computer-readable storage media may include tangible or non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 202 to perform a certain operation or group of operations associated with the system 102.

The memory 204 may further store the automated ML tool 212. In some aspects the automated ML tool 212 may be placed out of the memory 204. The automated machine learning tool (AutoML) 212 may refer to a system 102 or process that automates the tasks involved in applying machine learning to real-world problems. AutoML may encompass a range of techniques and algorithms designed to automatically select, configure, and optimize machine learning models (e.g., forecasting model 206) without extensive manual intervention.

In some aspects, the AutoML tool 212 may perform tasks such as data preprocessing, feature selection, model selection, hyperparameter tuning, and model evaluation. The AutoML tool 212 may iterate through multiple combinations of algorithms, feature engineering techniques, and hyperparameters to identify the best-performing model for a given dataset and problem.

The AutoML tool 212 may utilize techniques such as Bayesian optimization, genetic algorithms, or neural architecture search to efficiently explore the space of possible models and configurations. In some cases, the AutoML tool 212 may manage tasks like missing value imputation, encoding of categorical variables, and scaling of numerical features.

The AutoML tool 212 may process may begin with input data (e.g., records from the table) and progress through various stages, potentially including data cleaning, feature engineering, model selection, hyperparameter optimization, and ensemble creation. The output may be a fully trained forecasting model 206 ready for deployment, along with performance metrics and explanations of the model's decision-making process.

In the context of predictive maintenance for data centers or industrial facilities, the AutoML tool 212 may be used to automatically develop and refine the forecasting model 206 based on the sensor data from the table.

The forecasting model 206 may be a machine learning model configured to predict future values or trends based on historical data. In some aspects, the forecasting model 206 may utilize various algorithms and techniques to analyze patterns and relationships in the input data to generate predictions. The forecasting model 206 may be trained on a dataset containing historical measurements and corresponding outcomes to learn the underlying patterns and correlations.

In some implementations, the forecasting model 206 may be a time series forecasting model, such as an Autoregressive Integrated Moving Average (ARIMA) model, which can capture trends and seasonality in the data. Alternatively, the model may be based on more advanced techniques like Long Short-Term Memory (LSTM) neural networks, which are capable of learning long-term dependencies in sequential data.

The forecasting model 206 may take various forms depending on the specific requirements of the application. For example, in a data center environment, the model may be used to predict future power consumption based on historical usage patterns, environmental conditions, and scheduled workloads. In an industrial setting, the model may forecast equipment failure probabilities by analyzing sensor data such as vibration, temperature, and pressure readings.

The model's predictions may be used to generate actionable insights for system operators. For instance, the forecasting model 206 may predict that a specific HVAC component is likely to fail within the next month based on performance metrics of the HVAC component. This prediction may then be used to schedule preventive maintenance, potentially avoiding costly downtime, and extending the equipment's lifespan.

In some cases, the forecasting model 206 may be part of a larger predictive maintenance system (such as the system 102). The system 102 may combine the forecasting model's outputs with other data sources and expert knowledge to provide comprehensive recommendations for system 102 optimization and maintenance scheduling.

In some embodiments, the forecasting model 206 may be defined by its hyper-parameters, for example, number of weights, cost function, input size, number of layers, and the like. During training, the parameters of the ML model may be tuned, and weights may be updated so as to move towards a global minima of a cost function for the ML model. After several epochs of the training on the feature information in the training dataset, the ML model may be trained to output a prediction/regression result for a set of inputs. The prediction result may be indicative of a value for each input of the set of inputs (measurement parameters).

The ML model may include electronic data, which may be implemented as, for example, a software component of an application executable on the sensor data of the system 102. The ML model may rely on libraries, external scripts, or other logic/instructions for execution by a processing device, such as the processor 202. The ML model may include code and routines configured to enable a computing device, such as processor 202 to perform one or more operations such as forecasting a value of the measurement parameters of the plurality of sensors 126A-126N installed in the built environment 104. Additionally, or alternatively, the ML model may be implemented using hardware including a processor, a microprocessor (e.g., to perform or control performance of one or more operations), a field-programmable gate array (FPGA), or an application-specific integrated circuit (ASIC). Alternatively, in some embodiments, the ML model may be implemented using a combination of hardware and software.

The I/O device 208 may include suitable logic, circuitry, interfaces, and/or code that may be configured to receive a user input The I/O device 208 may be further configured to provide an output in response to the user input The I/O device 208 may include various input and output devices, which may be configured to communicate with the processor 202 and other components, such as the network interface 210. Examples of the input devices may include, but are not limited to, a touch screen, a keyboard, a mouse, a joystick, and/or a microphone. Examples of the output devices may include, but are not limited to, a display device 112 and a speaker. The I/O device 208 may be configured within the system 102 or outside of the system 102.

The network interface 210 may communicate via wireless communication with networks, such as the Internet, an Intranet, and/or a wireless network, such as a cellular telephone network, a wireless local area network (LAN) and/or a metropolitan area network (MAN). The wireless communication may use any of a plurality of communication standards, protocols and technologies, such as Global System for Mobile Communications (GSM), Enhanced Data GSM Environment (EDGE), wideband code division multiple access (W-CDMA), Long Term Evolution (LTE), code division multiple access (CDMA), time division multiple access (TDMA), Bluetooth, Wireless Fidelity (Wi-Fi) (such as IEEE 802.11a, IEEE 802.11b, IEEE 802.11g and/or IEEE 802.11n), voice over Internet Protocol (VoIP), light fidelity (Li-Fi), or Wi-MAX.

In certain embodiments, the system 102 may include the display device 112, remote server 106 and relational database 108. Modifications, additions, or omissions may be made to the system 102, without departing from the scope of the present disclosure. For example, in some embodiments, the system 102 may include any number of other components that may not be explicitly illustrated or described. The forecast model is described in detail in FIG. 3A, FIG. 3B, FIG. 4, and FIG. 5.

FIGs. 3A and 3B are diagrams that collectively illustrate a flow chart of an example method for automated machine learning based workflow training and timeseries forecasting, in accordance with an embodiment of the disclosure. FIG. 3A and FIG. 3B may be described in conjunction with elements from FIG. 1 and FIG. 2. With reference to FIG. 3A and FIG. 3B, an execution flow 300 is shown. The exemplary execution flow 300 may include a set of operations that may be executed by one or more components of FIG. 1, such as the system 102. The operations may include sensor data reception, sensor data storing in a relational database 108, cut-off record determination, records determination, size of the record comparison, training dataset preparation and forecasting model 206 training. The system 102 may perform the set of operations for automated machine learning based workflow for timeseries forecasting.

At 302, an operation of sensor data reception may be performed. The system 102 may be configured to receive sensor data for a measurement parameter from at least one sensor of the plurality of sensors 126A-126N installed in the built environment 104. Examples of the sensor data may include, but are not limited to, temperature values, air quality values, power consumption values, and air pressure values. The built environment 104 may be a data center, an HVAC system, a manufacturing facility, a warehouse and distribution center, a power plant, or other similar facilities. Data centers may house computer systems and associated components, such as telecommunications and storage systems. Data centers may be designed to ensure continuous operation of Information Technology (IT) services, with features like climate control, backup power supplies, and security systems. HVAC systems may be essential for maintaining indoor air quality and thermal comfort in buildings. HVAC systems may regulate temperature, humidity, and air flow, ensuring a comfortable and safe environment using the plurality of sensors 126A-126N and sensor monitoring devices (for example, the system 102). Warehouse and distribution centers may be used to store goods and manage inventory. These facilities may be designed for efficient movement and storage of products, often featuring high ceilings, wide aisles, and advanced logistics systems to track and manage inventory. Warehouse and distribution centers may use the plurality of sensors 126A-126N to monitor operations.

At 304, an operation of sensor data storage may be performed. The sensor data may be stored as new records in a table of the relational database 108. The relational database 108 may query and manipulate data based on the sensor data input. Relational database 108 may provide the ability to efficiently store and query large amounts of structured data. Each sensor data may correspond to a table in the relational database 108. Each sensor data collected by a sensor may correspond to a table column, and each table row may consist of sensor data (measurement parameter) collected by the sensor (for example 126A) at a particular point of time (i.e., a measurement timestamp). The built environment 104 with the plurality of sensors 126A-126N may continuously collect sensor data from the plurality of sensors 126A-126N installed throughout the built environment 104 and monitor the received sensor data.

At 306, an operation of cut-off record determination for the measurement parameter may be performed. The sensor data collected from at least one sensor of the plurality of sensors 126A-126N may be checked for the cut-off record associated with a previous training checkpoint of the forecasting model 206 for the measurement parameter. For example, considering 'temperature value' as the measurement parameter, the 'temperature value' may be received every 5 seconds. If a 'temperature value' is received at measurement timestamp '00:10:10', the next 'temperature value' may be received at '00:10:15'.

The cut-off record may be defined as the last record used in the previous training of the forecasting model 206. For instance, if the forecasting model 206 was last trained using temperature data up to timestamp '12:00:00' on a particular day, this timestamp may be considered the cut-off record. All temperature values recorded up to and including this timestamp were used in the previous training of the forecasting model 206.

In the previous example, if the current timestamp is '14:30:00', the system 102 may determine that all temperature values recorded between '12:00:00' and '14:30:00' are new records that were not used in the previous training of the forecasting model 206. These new records may be considered for the next steps in the process, such as determining if there is sufficient new data to warrant retraining the model.

The cut-off record may also be defined in terms of the number of records. For example, if the forecasting model 206 was last trained using 1,000,000 temperature readings, the 1,000,000th record may be considered the cut-off record. Any temperature readings collected after this record would be considered new data not used in the previous training of the forecasting model 206.

In one example, a cut-off record with a count of '50,00,000' may be considered, and the 'temperature value' occurring at the next count may be considered as the measurement timestamp occurring after the cut-off record and may be considered for the next steps (see at 310). The 'temperature value' occurring at the cut-off record (that is, before the count '50,00,000') may be considered as the previous training checkpoint. The parameter timestamp may be considered after the previous training checkpoint. In another example, considering 'temperature value' as the measurement parameter, a timestamp '10:00:00' of a particular day or month may be considered as the cut-off record, and the 'temperature value' occurring after the timestamp '10:00:00' may be considered for the next steps (see at 310). The values specified in the measurement parameters and the measurement timestamp may vary depending on various scenarios (for example, volume of records, type of system 102 or built environment 104).

This approach allows the system 102 to efficiently identify new data for potential use in updating the forecasting model 206, ensuring that the model remains current and accurate as new sensor data is continuously collected from the built environment.

At 308, records including the new records for which respective measurement timestamps, as specified in the table, occur after a measurement timestamp of the cutoff record may be determined. Specifically, the system 102 may compare the measurement timestamp of each record in the table against the timestamp of the cutoff record. Any record with a timestamp later than the cutoff record's timestamp may be considered a new record and is included in the determination. This process may effectively filter out all data that was used in the previous training checkpoint of the forecasting model 206, focusing only on the newly collected sensor data. For example, if the cutoff record has a timestamp of '2023-07-30 12:00:00', the system 102 may identify all records in the table with timestamps after '2023-07-30 12:00:00'. Such records may represent the new sensor data collected since the last model training checkpoint

At 310, it may be further determined whether a size of the records (determined at 308) is above a threshold size. In case the size of the records is above the threshold size, the control may pass to 312. In case the size of the records is below the threshold size, the control may pass to 326. Herein, the records occurring after the measurement timestamp of the cut-off record may be considered for the next step 312.
The operations from 312 to 320 may be performed for data pre-processing, as described herein.

At 312, feature column extraction and timestamp sorting may be performed.

The processor 202 may extract, from the records of the table, a feature column that stores values of the measurement parameter and the respective measurement timestamps. Values from the feature column and corresponding measurement timestamps may be extracted and sorted based on the timestamps. The feature column may contain specific values of interest (e.g., temperature, air pressure, humidity) within the dataset The table in relational data 114 may associate measurement timestamps with measurement parameters. Measurement timestamps may record when parameter values occurred. Feature column values may be sorted by timestamp. In some aspects, measurement timestamps may be converted to 'datetime' format for proper sorting. After sorting, a median interval between measurement timestamps may be computed. Time differences between consecutive timestamps may be used to determine the median interval.

At 314, an aggregation query may be executed after the sorting on the feature column to generate an aggregated feature column. The aggregation query may retrieve computed timestamps, designate such timestamps as 'aggregated interval', compute average values for each interval, and group results by interval. An example of the aggregation query is given as follows:
SELECT CAST (unixepoch(timestamp) / median_interval AS INTEGER) AS aggregated_interval, avg(feature) AS avg_feature
FROM retrieved_data
GROUP BY aggregated_interval;

The aggregation query may perform computations on feature column values to produce aggregated values. In an embodiment, the execution of the aggregation query may include several steps to process the feature column data. In some aspects, the processor 202 may be configured to divide the respective measurement timestamps by the computed median interval to determine a plurality of aggregate intervals. This division operation may help normalize the timestamps and group them into consistent intervals. The processor 202 may then select, from the feature column, a set of values corresponding to each unique aggregate interval of the plurality of aggregate intervals. This selection process may involve identifying all data points that fall within each normalized interval. After selecting the relevant values, the processor 202 may compute an average value of the set of values for each aggregate interval. This averaging operation may help smooth out short-term fluctuations and highlight longer-term trends in the data. Finally, the processor 202 may group the average value based on the plurality of aggregate intervals. The resulting aggregate feature column may include the average value corresponding to each unique aggregate interval of the plurality of aggregate intervals. The grouping operation may help to organize the processed data in a format that can be easily used for further analysis or model training.

In some cases, the aggregation query may be customized or modified based on specific requirements of the forecasting model 206 or the nature of the sensor data being processed. For example, instead of using an average, the query might use other aggregation functions such as median, maximum, or minimum, depending on the characteristics of the measurement parameter being analyzed.

At 316, missing measurement timestamps in the aggregated feature column may be determined. The processor 202 may identify missing timestamps and estimate such missing timestamps using a suitable interpolation method, such as linear interpolation. Linear interpolation may estimate unknown values falling between two known consecutive feature column values.

At 318, missing values corresponding to missing measurement timestamps in the aggregated feature column may be filled. The processor 202 may use the interpolation method to fill all of the missing values. For example, with measurement timestamps '00:10:05' and '00:10:15' and a 5-second recording interval, missing values may be interpolated between the known timestamps.

At 320, an operation of sliding window size determination may be performed. The processor 202 may be configured to determine the sliding window size for the aggregated feature column. The sliding window size may be defined as length 2 or greater (i.e., n ≥ 2, where n is an even number). The feature column values may be considered with a first set of data points of the feature column that fit within the window. The window may move 2 data points at a time (or by a defined step size), processing each new set of data points as the window slides over the dataset.

Sliding windows may be used to create features that capture temporal patterns. In time series forecasting, sliding windows may create lag features by taking the value of the variable from the previous time point and including such value as a feature in the model at the current time point. For example, to forecast warehouse access data for the next day, past 7 days' access data may be required. The last 7-day sales data may be referred to as lag features.

In real-time systems, such as fraud detection or recommendation engines, sliding windows may help maintain up-to-date features by continuously aggregating recent data. For temperature sensor readings received at certain intervals (for example, every 2 seconds), a sliding window of size 2 may be used to calculate the average temperature for every 2 readings, updating the average as new readings arrive and old ones are removed.

Once the sliding window size is determined, the dataset may be split into a suitable ratio (e.g., 80% training and 20% testing sets). The split index may be used to divide the windows into training and testing sets.

At 322, an operation of obtaining a training dataset may be performed. The processor 202 may be configured to obtain the training dataset from the aggregated feature column based on the sliding window size. For instance, the training dataset may include 80% of rows in chronological order, while the testing dataset may consist of the remaining 20%. The forecasting model 206 may be trained using the training dataset as input.

At 324, an operation of forecasting model 206 training may be performed. The processor 202 may be configured to train the forecasting model 206 based on the comparison of the determined records' size with the threshold size. Specifically, the forecasting model 206 may be trained on the training dataset if the size of the records is above the threshold size. The training dataset may be prepared based on the determined records. Records may be determined for measurement timestamps occurring after the measurement timestamp cut-off record to compare the size of the determined records with the threshold size.

In at least one embodiment, the forecasting model 206 may be trained using an automated machine learning operation. The automated machine learning operation (performed using the automated machine learning tool (AutoML) 212) for training the forecasting model 206 may involve several steps and techniques specifically tailored for time series forecasting. In some aspects, the operation may begin with automatic feature engineering, where relevant features are extracted from the time series data. This may include creating lag features, rolling statistics, and seasonal indicators, for example.

The operation may then proceed to algorithm selection, where various time series forecasting models such as ARIMA, Prophet, or advanced deep learning models like LSTM or Transformer-based architectures may be evaluated. In some cases, the automated ML tool 212 may test multiple algorithms in parallel, comparing the performance of such algorithms on the training data. Additionally, hyperparameter tuning may be performed automatically, with the system 102 exploring different combinations of model parameters to optimize performance. This may involve techniques such as grid search, random search, or Bayesian optimization. The automated ML operation may also handle data preprocessing tasks, such as handling missing values, detecting, and removing outliers, and normalizing or scaling the data as needed for different algorithms. Additionally, cross-validation techniques specific to time series data, such as time series cross-validation or rolling window validation, may be employed to ensure robust model evaluation and selection. In some implementations, the automated ML operation may incorporate ensemble methods, combining predictions from multiple models to improve overall forecasting accuracy. Throughout the training of the forecasting model 206, the automated ML operation may continuously monitor and evaluate model performance, potentially implementing early stopping mechanisms to prevent overfitting.

At 326, an operation of obtaining a forecast value may be performed. The processor 202 may be configured to obtain the forecast value from the trained forecasting model 206. If the determined record size is below the threshold size, the forecast value may be obtained from the trained forecasting model 206. If the determined record size is above the threshold size, the forecasting model 206 may be trained on the dataset.

Once the trained forecasting model 206 is obtained, a forecast may be retrieved by running a forecasting procedure. Future time and features to forecast may be supplied as input to the forecasting model 206, which may output the predicted value for the feature at the given point in time.

At 328, an operation of querying the knowledge database 214 may be performed. The processor 202 may be configured to query the knowledge database 214 based on the forecast value to determine a suggestion for equipment installed in the built environment 104. The knowledge database 214 may include tables with elements such as conditions, initialization contents, states of environmental sensors, entries added by administrators 128, and other relevant information.

At 330, an operation to determine a historical value that matches the forecast value may be performed. The processor 202 may be configured to identify a historical value that corresponds to the forecast value. The historical value may be derived from sensor data collected before training the forecasting model 206. These historical values may be prestored within the knowledge database 214 for comparison by administrators 128. In some embodiments, the historical values may include data collected during maintenance of equipment within the built environment 104.

At 332, an operation to retrieve suggestions corresponding to the identified historical value may be performed. The processor 202 may be configured to retrieve suggestions that correspond to the matched historical value. The suggestions may be obtained from the knowledge database 214 (at step 334). The knowledge database 214 may include tables with various elements. These elements may include conditions 334A, decision information 334B, and source types 334C. The knowledge database 214 may incorporate multiple elements without limitation.

At 334A, the condition may include a plurality of historical values of the measurement parameter and a respective plurality of timestamps associated with the plurality of historical values. For instance, the condition may indicate that the temperature has been increasing for the last week and the latest temperature exceeds 30 degrees Celsius, or that the 0.3-micron particle count has exceeded 10,000 for 24 hours. The historical values may be represented as text containing the names of measurement parameters, such as temperature, humidity, or 10.0-micron particle count. The value may be the numerical value associated with the historical value (for example, for a temperature of 30 degrees Celsius, the value may be 30.0). The time period or timestamp may be represented as a numerical value describing the elapsed time.

At 334B, the decision information may include a plurality of suggestions corresponding to the plurality of historical values. For example, data received during HVAC maintenance, repair, or replacement actions may be considered as decision information with respect to the forecast value.

At 334C, the source type may be associated with the conditions and the decision information. For example, the source type may store an Identity (ID) value indicating whether the source (table row) is derived from documentation (such as manuals and regulations), the operation of the built environment 104 during maintenance periods, or from the expertise and experience of the administrator 128 of the built environment 104.

In an embodiment, when initializing the system 102 for the first time, the initial conditions stored within the knowledge database 214 may include information derived from manuals and regulations. The system 102 may record sensor data from the built environment 104 while the built environment 104 is undergoing maintenance, repair, replacement, or similar activities. The administrator 128 of the built environment 104 may add entries to the knowledge database 214 based on their experience and expertise. These entries may include conditions, decision information, and source types. The system 102 may check or retrieve suggestions from the knowledge database 214 corresponding to the measurement parameter and feature value. Based on the entries in the knowledge database 214, the system 102 may determine whether any action needs to be taken.

The knowledge database 214 may further include decision information comprising a plurality of suggestions corresponding to the plurality of historical values. Additionally, the knowledge database 214 may include a source type associated with the conditions and the decision information.

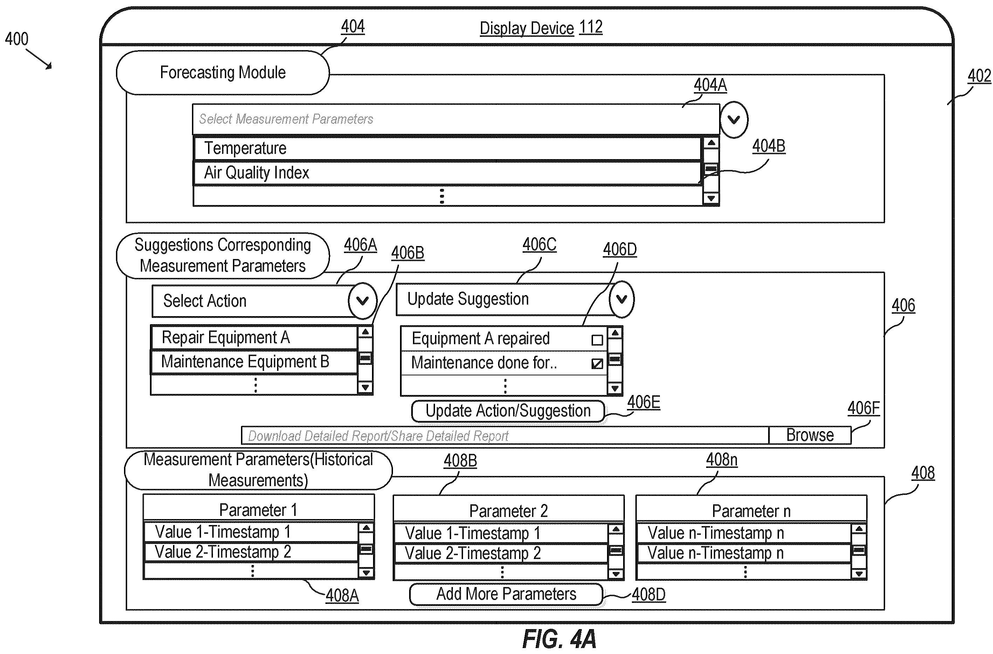

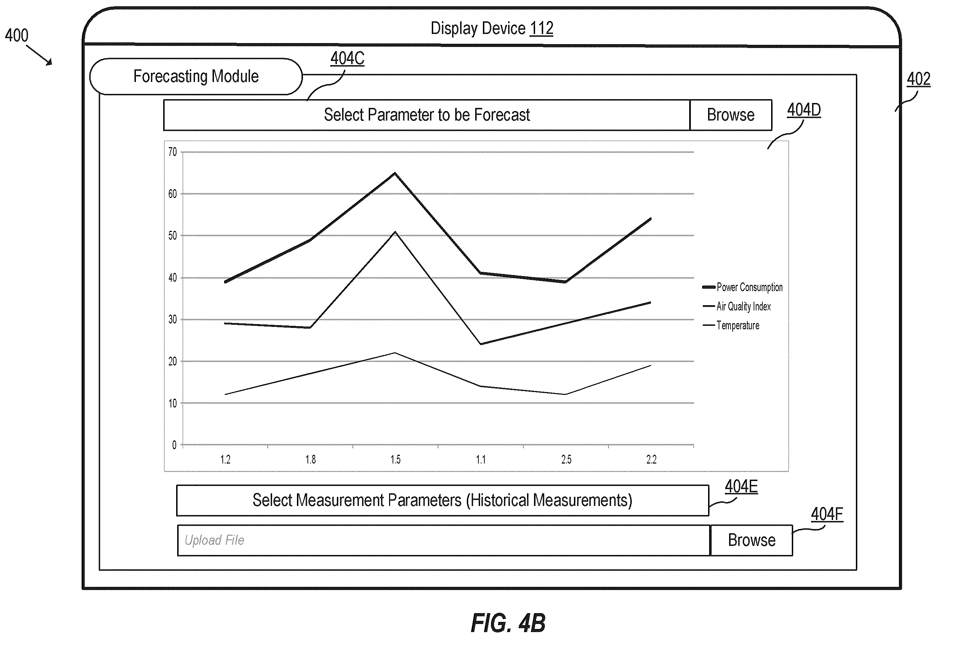

FIGs. 4A and 4B are diagrams that collectively illustrate an exemplary electronic user interface (UI) 402 of a display device 112, indicating forecasting values along with suggestions, in accordance with an embodiment of the disclosure. FIG. 4A and FIG. 4B are described in conjunction with elements from FIG. 1, FIG. 2, FIG. 3A, and FIG. 3B. The exemplary electronic UI 402 showing the forecasting method illustrated in the exemplary environment 400 may be implemented by any suitable system, apparatus, or device, such as the example system 102 of FIG. 1 or processor 202 of FIG. 2. The measurement parameters may include one or more parameters for automated machine learning-based workflow for time series forecasting without deviation from the scope of the disclosure.

The electronic UI 402 includes various UI elements, for example, a forecasting module 404, suggestions 406 corresponding to measurement parameters 408, measurement parameters 408, and the like. The electronic UI 402 may be associated with the administrator 128 of the built environment 104 to display the forecast value along with the suggestions 406. The forecasting module 404 may display the suggestions 406 including the forecast value corresponding to the faulty state of the equipment. The administrator 128 may select the measurement parameter (at 404A) to be forecast. Based on the administrator's selection, suggestions 406 may be displayed along with the forecast value. The suggestions 406 corresponding to measurement parameters may include multiple options for the administrator's selection, for example, select action 406A, update suggestion 406C, and the like. The select action 406A (UI element) may include a drop-down menu 406B. The drop-down menu 406B for the select action 406A may include options such as repair equipment A, maintenance of equipment B, and the like. The actions may be determined based on the forecasting model 206. The update suggestion 406C (UI element) may include a drop-down menu 406D. As shown, for example, the update suggestion 406C may include options such as equipment A repaired, maintenance done for equipment B, and the like. The actions and suggestions displayed in the drop-down menu may include additional UI elements. The update action or suggestion 406E (UI element) may be used to add or delete multiple actions or suggestions to the drop-down menus 406B or 406D. The selected actions and suggestions may be viewed in detail by downloading reports.

The electronic UI 402 may include an option to download or share a detailed report 406F. The report may include details of the action to be taken and historical measurements. The report may include updated suggestions 406C based on the action taken. The updated suggestions 406C may include another option for setting a reminder to provide a UI element for the maintenance of specific equipment or similar actions. The administrator 128 may set the reminder or the processor 202 based on the forecasting model 206 or the historical measurements.

Furthermore, the display device 112 may display measurement parameters (for example, historical measurements) 408 on UI elements such as, for example, parameter 1, parameter 2, ..., parameter n. The administrator 128 may view the historical values of the measurement parameters received from the plurality of sensors 126A-126N (stored in the relational database 108). The electronic UI 402 may display various datasets with respect to measurement parameters along with timestamps. For instance, value 1-timestamp 1 408A, 408B, 408C, value 2-timestamp 2 408A, 408B, 408C, ..., value n-timestamp n 408n. In an embodiment, the administrator 128 may include multiple parameters using the 'add more parameters' 408D prompt. The present disclosure may also be applicable to other modifications, deletions, or additions to the electronic UI 402, without deviation from the scope of the present disclosure.

Referring to FIG. 4B, a graph 404D shows the forecast values. The graph may include exemplary values of the measurement parameters, for example, power consumption, air quality index, temperature, and the like. The administrator 128 may select the parameters to be forecast using 404C. Based on the selected measurement parameters, the graph 404D may be shown for easy evaluation.

The electronic UI 402 may display the forecast values and may provide suggestions for equipment (for example, servers, access doors, and the like) installed in the built environment 104. The electronic UI 402 may further include a prompt for selecting measurement parameters (historical measurements) 404E. The selected measurement parameters 404E may be used to choose the measurement parameters and display them as a graph showing the forecast values. In an embodiment, the graph may display the forecast values or the values with respect to measurement parameters. The administrator 128 may select the measurement parameters for comparing various measurement parameters. The administrator 128 may upload a file or document 404F including the measurement parameters and the measurement timestamps along with the forecast values. It should be noted that the electronic UI 402 is merely provided as an exemplary implementation of the display device 112 of FIG. 1 and should not be construed as limiting the scope of the disclosure. The present disclosure may also be applicable to other modifications, deletions, or additions to the display device 112, without deviation from the scope of the present disclosure.

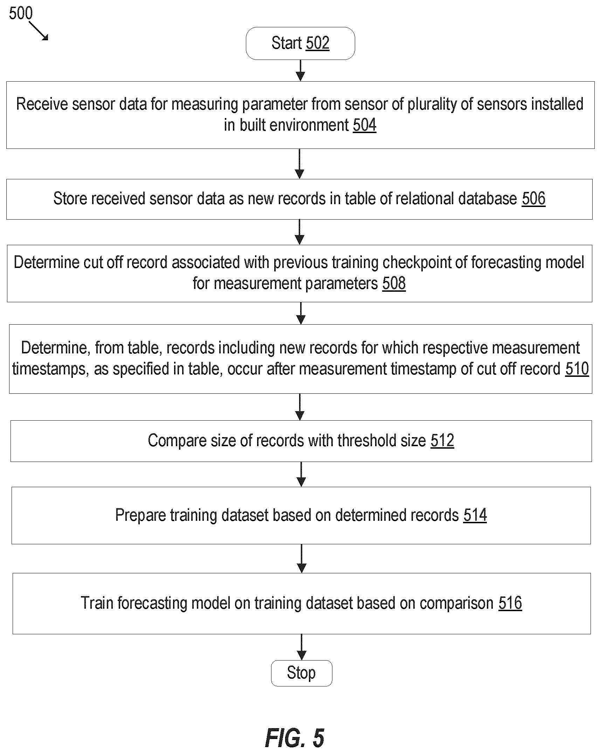

FIG. 5 is a diagram that illustrates a flowchart of an example for automated machine learning based workflow for timeseries forecasting, in accordance with an embodiment of the disclosure. FIG. 5 is described in conjunction with elements from FIG. 1, FIG. 2, FIG. 3A, FIG. 3B, FIG. 4A and FIG. 4B. With reference to FIG. 5, there is shown the exemplary flow 500. The method illustrated in the exemplary environment 500 may be performed by any suitable system, apparatus, or device, such as, by the example system 102 of FIG. 1, or processor 202 of FIG. 2. Although illustrated with discrete blocks, the steps and operations associated with one or more of the blocks of the flow 600 may be divided into additional blocks, combined into fewer blocks, or eliminated, depending on the particular implementation. The operations may start at 502 and may proceed to 904.

At 504, sensor data for measuring parameter may be received from the sensor of the plurality of sensors 126A-126N installed in the built environment 104. The sensor data may include data received from the at least one sensor of the plurality of sensors 126A-126N such as temperature and humidity sensor, air pressure sensor, air quality sensor, and the like. The plurality of sensors 126A-126N may collect environmental data within the built environment 104. The built environment 104 may be a data center, an HVAC system, or similar facility. The measuring parameter may be stored in relational database 108 once it is received from the plurality of sensors 126A-126N. The relational database 108 organizes data into tables. Each table includes rows and columns, where rows may represent individual records (for example measurement parameters) and columns represent the attributes (values with respect to the measurement parameters) of the records.

At 506, the received sensor data may be stored as new records in table of relational database 108. The sensor data from the at least one sensor of the plurality of sensors 126A-126N may be collected from the built environment 104 for example, temperature, humidity, pressure sensors and the like. The relational database 108 may include table for example 'sensor tables' that stores information such as temperature, humidity, and the like along with the locations of the plurality of sensors 126A-126N. The relational database 108 may include table for example 'sensorData table' that stores the data collected from the plurality of sensors 126A-126N, including the timestamp (for example measurement timestamp). The received sensor data may then be stored in the relational database 108. The 'sensorData table' is then stored in the relational database 108, and the 'sensorData table' may have entries for each record, including the time and value of the measurement parameter. The specific data may be retrieved from the relational database 108 by querying the relational database 108. For example, the administrator 128 may retrieve temperature records from space 1. The relational database 108 may find and provide the information by looking at the relevant tables.

At 508, cut-off record may be determined associated with the previous training checkpoint of forecasting model 206 for measurement parameters. The cut-off record may be determined based on the dataset used for training the forecasting model 206. Considering an example of the sensor data received from timestamps 01:00:00 to 12:00:00 may be used for training the forecasting model 206. The cut-off record may be considered at 12:00:00 as the previous training checkpoint of the forecasting model 206 for the measurement parameter. The cut-off record may be for different ranges (for example, number of days, months, or years) and forecasting model 206 may vary based on the different ranges.

At 510, records including new records may be determined for which respective measurement timestamps, as specified in table, occur after the measurement timestamp of the cut-off record. The records occurring after the measurement timestamp of the cut-off record may be determined as specified in the table.

At 512, size of the records may be compared with the threshold size. The threshold size may be the time set for training the forecasting model 206. In an embodiment, the threshold may be the number of records received for a set period of time. For example, the records received after the cut-off records may be compared with the threshold size and the threshold size may be '500000' records. Once the size of the determined records are above the '500000' records, then the records may be considered threshold point and considered the threshold size as "500000'.

At 514, training dataset may be prepared based on the records. Once compared, the training dataset may be prepared by determining that the determined records are above threshold size. The preparation of the training dataset may include several steps such as, extraction of the feature column, sorting the values, computing the median interval, executing the aggregation query, determining missing timestamps, filling the missing values, determining sliding window, and obtaining the training dataset. an operation of feature column extraction and respective timestamp sorting may be performed.

The feature column may store the values of the measurement parameter. The values of the feature column and the respective measurement timestamps may be extracted and sorted based on the respective measurement timestamps. The measurement timestamp may record the time at which the measurement parameter is extracted. The values within the feature column may be sorted based on the timestamp. In an embodiment, the measurement timestamp may be converted to 'datetime' format to ensure sorting. Once the values in the feature column are sorted, the median interval between the respective measurement timestamps may be computed. The time difference between the consecutive timestamps may be determined to compute median of the difference. The aggregation query may be executed on the feature column to generate aggregated feature column. The aggregation query may include retrieving timestamps divided by the median interval, naming the retrieved timestamps 'aggregated interval,' computing average value of the 'aggregated interval,' grouping the average value by 'aggregated interval.' An example of the query for the aggregation is given as follows:
SELECT CAST (unixepoch(timestamp) / median_interval AS INTEGER) AS aggregated_interval, avg(feature) AS avg_feature
FROM retrieved_data
GROUP BY aggregated_interval;

The aggregation query may be used to perform computation on the values of the feature column to produce the aggregated value. Further, the processor 202 may be configured to determine missing measurement timestamps. The processor 202 is configured to determine the missing measurement timestamps in the aggregated feature column. The missing measurement timestamps may be identified and filled using the linear interpolation and the sliding window size determination may be performed. The processor 202 may be configured to determine the sliding window size for the aggregated feature column. The sliding window may require defining size of the window. The sliding window size may be considered of length 2 or greater than 2 (for example, n>=2), where n is an even number. The sliding windows may be used to create features that capture temporal patterns. In real-time systems, such as fraud detection or recommendation engines, sliding windows help in maintaining up-to-date features by continuously aggregating recent data. Once the size of the sliding window is decided, the index for the sliding window may be split into 80% training and 20% testing. The index may be the point at which the dataset is split into training and testing sets. The split index may be used to divide the windows into training and testing sets. The training dataset may be obtained from the aggregate feature column based on the sliding window size. The training dataset may consider the split sliding windows (for example, 80% training and 20% testing) for obtaining the training dataset.

At 516, forecasting model 206 may be trained on the training dataset based on the comparison. The forecasting model 206 may be trained based on the comparison of the size of the determined records with the threshold size. The training dataset may be prepared based on the determined records. The records may be determined for measurement timestamps occurring after the measurement timestamp cut-off record to compare the size of the determined record with the threshold size. The forecasting model 206 may be trained on the training dataset based on the determination that the size of the records is above the threshold size. The forecasting model 206 may be trained using the automated machine learning operation. The forecast value may be obtained from the trained forecasting model 206. In an embodiment, when the measurement timestamp of the record occurs before the cut-off, then forecast value may be obtained from the trained forecasting model 206. When measurement timestamp of the record occurs after the cut-off, then the forecasting model 206 may be trained on the dataset Further, when the determined record size is below the threshold size, then forecast value may be obtained from the trained forecasting model 206. When the determined record size is above the threshold size, then the forecast value may be trained on the dataset

It should be noted that the display device 112 having the electronic UI 402 is merely provided as an exemplary implementation of the display device 112 of FIG. 1 and should not be construed as limiting for the scope of the disclosure. The present disclosure may also be applicable to other modifications, deletions, or additions to the electronic UI 402, without a deviation from the scope of the present disclosure.

Embodiments described in the present disclosure may be used in many application areas, such as Heating, Ventilation, and Air Conditioning (HVAC), manufacturing buildings, warehouse and distribution centers, power plants and the like.

Various embodiments of the disclosure may provide one or more non-transitory computer-readable storage media configured to store instructions that, in response to being executed, cause a system (such as the system 102) to perform operations. The operations may include receiving sensor data for a measurement parameter from a sensor of a plurality of sensors 126A-126N installed in a built environment 104 and storing the received sensor data as new records in a table of a relational database 108. The operations may further include determining a cut off record associated with a previous training checkpoint of a forecasting model 206 for the measurement parameter and determining records including the new records for which respective measurement timestamps, as specified in the table, occur after a measurement timestamp of the cutoff record. The operations may further include comparing a size of the determined records with a threshold size and preparing training dataset based on the determined records to train the forecasting model 206 on the training dataset.

As indicated above, the embodiments described in the present disclosure may include the use of a special purpose or general-purpose computer (e.g., the processor 202 of FIG. 2) including various computer hardware or software modules, as discussed in greater detail below. Further, as indicated above, embodiments described in the present disclosure may be implemented using computer-readable media (e.g., the memory 204 or the relational data 114 or automated ML tool 212 of FIG. 2) for carrying or having computer-executable instructions or data structures stored thereon.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the system 102. In some embodiments, the different components, modules, engines, and services described in the present disclosure may be implemented as objects or processes that execute on the system 102 (e.g., as separate threads). While some of the system 102 and methods described in the present disclosure are generally described as being implemented in software (stored on and/or executed by general purpose hardware), specific hardware implementations or a combination of software and specific hardware implementations are also possible and contemplated. In this description, a "computing entity" may be any system 102 as previously defined in the present disclosure, or any module or combination of modulates running on the system 102.

Additionally, if a specific number of an introduced claim recitation is intended, such an intent will be explicitly recited in the claim, and in the absence of such recitation no such intent is present For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art and are to be construed as being without limitation to such specifically recited examples and conditions. Although embodiments of the present disclosure have been described in detail, various changes, substitutions, and alterations could be made hereto without departing from the spirit and scope of the present disclosure.

## Claims

1. A method, executed by at least one processor, comprising:
receiving sensor data for a measurement parameter from a sensor of a plurality of sensors installed in a built environment;
storing the received sensor data as new records in a table of a relational database;
determining a cut-off record associated with a previous training checkpoint of a forecasting model for the measurement parameter;
determining, from the table, records including the new records for which respective measurement timestamps, as specified in the table, occur after a measurement timestamp of the cut-off record;
comparing a size of the determined records with a threshold size;
preparing a training dataset based on the determined records; and
training the forecasting model on the training dataset based on the comparison.

2. The method according to claim 1, wherein the built environment includes one of a data center and an industrial facility.

3. The method according to claim 1, wherein the forecasting model is trained on the training dataset based on a determination that the size of the records is above the threshold size.

4. The method according to claim 1, further comprising:
preparing an input for the forecasting model based on the received sensor data and a determination that the size of the records is below the threshold size;
applying the forecasting model on the prepared input to generate a forecast value of the measurement parameter for a future timestamp; and
querying a knowledge database based on the forecast value to determine a suggestion for equipment installed in the built environment.

5. The method according to claim 4, wherein the suggestion includes an action to perform a repair or maintenance of the equipment, a servicing of the equipment, or a replacement of the equipment.

6. The method according to claim 4, wherein the suggestion indicates whether the forecast value corresponds to a faulty state of the equipment.

7. The method according to claim 4, further comprising controlling a display device associated with an administrator of the built environment to display the forecast value along with the suggestion.

8. The method according to claim 4, wherein the knowledge database comprises:
conditions that include a plurality of historical values of the measurement parameter and a respective plurality of timestamps associated with the plurality of historical values,
decision information that include a plurality of suggestions corresponding to the plurality of historical values, and
a source type associated with the conditions and the decision information.

9. The method according to claim 8, wherein the querying of the knowledge database comprises:
determining, from the plurality of historical values, a historical value that matches the forecast value; and
retrieving the suggestion that corresponds to the historical value from the plurality of suggestions.

10. The method according to claim 1, wherein the preparing the training dataset comprises:
extracting, from the records of the table, a feature column that stores values of the measurement parameter and the respective measurement timestamps;
sorting the values in the feature column based on the respective measurement timestamps;
computing a median interval between the respective measurement timestamps;
executing, after the sorting, an aggregation query on the feature column to generate an aggregated feature column; and
determining missing measurement timestamps in the aggregated feature column;
filling missing values corresponding to the missing measurement timestamps in the aggregated feature column;
determining a sliding window size for the aggregated feature column; and
obtaining the training dataset from the aggregate feature column based on the sliding window size.

11. The method according to claim 10, wherein the execution of the aggregation query comprises:
dividing the respective measurement timestamps by the computed median interval to determine a plurality of aggregate intervals;
selecting, from the feature column, a set of values corresponding to each unique aggregate interval of the plurality of aggregate intervals;
computing an average value of the set of values; and
grouping the average value based on the plurality of aggregate intervals, wherein the aggregate feature column includes the average value corresponding to each unique aggregate interval of the plurality of aggregate intervals.

12. The method according to claim 1, wherein the forecasting model is trained using an automated machine learning operation.

13. One or more non-transitory computer-readable storage media configured to store instructions that, in response to being executed, cause a system to perform operations, the operations comprising:
receiving sensor data for a measurement parameter from a sensor of a plurality of sensors installed in a built environment;
storing the received sensor data as new records in a table of a relational database;
determining a cut-off record associated with a previous training checkpoint of a forecasting model for the measurement parameter;
determining, from the table, records including the new records for which respective measurement timestamps, as specified in the table, occur after a measurement timestamp of the cut-off record;
comparing a size of the determined records with a threshold size;
preparing a training dataset based on the determined records; and
training the forecasting model on the training dataset based on the comparison.

14. The one or more non-transitory computer-readable storage media according to claim 13, wherein the forecasting model is trained on the training dataset based on a determination that the size of the records is above the threshold size.

15. The one or more non-transitory computer-readable storage media according to claim 13, wherein the operations further comprise:
preparing an input for the forecasting model based on the received sensor data and a determination that the size of the records is below the threshold size;
applying the forecasting model on the prepared input to generate a forecast value of the measurement parameter for a future timestamp; and
querying a knowledge database based on the forecast value to determine a suggestion for equipment installed in the built environment.

16. The one or more non-transitory computer-readable storage media according to claim 15, wherein the operations further comprise controlling a display device associated with an administrator of the built environment to display the forecast value along with the suggestion.

17. The one or more non-transitory computer-readable storage media according to claim 15, wherein the knowledge database comprises:
conditions that include a plurality of historical values of the measurement parameter and a respective plurality of timestamps associated with the plurality of historical values,
decision information that include a plurality of suggestions corresponding to the plurality of historical values, and
a source type associated with the conditions and the decision information.

18. The one or more non-transitory computer-readable storage media according to claim 13, wherein the preparing of the training dataset comprises:
extracting, from the records of the table. a feature column that stores values of the measurement parameter and the respective measurement timestamps;
sorting the values in the feature column based on the respective measurement timestamps;
computing a median interval between the respective measurement timestamps;
executing, after the sorting, an aggregation query on the feature column to generate an aggregated feature column; and
determining missing measurement timestamps in the aggregated feature column;
filling missing values corresponding to the missing measurement timestamps in the aggregated feature column;
determining a sliding window size for the aggregated feature column; and
obtaining the training dataset from the aggregate feature column based on the sliding window size.

19. The one or more non-transitory computer-readable storage media according to claim 18, wherein the execution of the aggregation query comprises:
dividing the respective measurement timestamps by the computed median interval to determine a plurality of aggregate intervals;
selecting, from the feature column, a set of values corresponding to each unique aggregate interval of the plurality of aggregate intervals;
computing an average value of the set of values; and
grouping the average value based on the plurality of aggregate intervals, wherein the aggregate feature column includes the average value corresponding to each unique aggregate interval of the plurality of aggregate intervals.

20. A system, comprising:
a memory storing instructions; and
a processor, coupled to the memory, which executes the instructions to perform a process comprising:
receiving sensor data for a measurement parameter from a sensor of a plurality of sensors installed in a built environment;
storing the received sensor data as new records in a table of a relational database;
determining a cut-off record associated with a previous training checkpoint of a forecasting model for the measurement parameter;
determining, from the table, records including the new records for which respective measurement timestamps, as specified in the table, occur after a measurement timestamp of the cut-off record;
comparing a size of the determined records with a threshold size;
preparing a training dataset based on the determined records; and
training the forecasting model on the training dataset based on the comparison.
